# FASCICULE DE BREVET EUROPEEN

(11) **EP 3 386 821 B1**
(45) Date de publication et mention de la délivrance du brevet: **02.03.2022**
(21) Numéro de dépôt: 16809344.1
(22) Date de dépôt: 06.12.2016
(51) Int. Cl.: B60W 10/02, B60W 10/20, B60W 10/18, B60W 10/04, B60W 30/16, B60W 30/18, F16D 48/06, G06K 9/00, G06K 9/62

(54) **DISPOSITIF D'ASSISTANCE À LA CONDUITE**
VORRICHTUNG ZUR FAHRERASSISTENZ
DEVICE FOR DRIVING ASSISTANCE

(30) Priorité: 07.12.2015 FR 1561943
(43) Date de publication de la demande: 17.10.2018
(73) Titulaire: Valeo Schalter und Sensoren GmbH, 74321 Bietigheim-Bissingen (DE)
(72) Inventeur: PICRON, Vanessa, 94046 Créteil Cedex (FR); BRADAI, Benazouz, 94046 Créteil Cedex (FR); HEITZMANN, Thomas, 94046 Créteil Cedex (FR); FOURNIGAULT, Damien, 94046 Créteil Cedex (FR); TACCOEN, Didier, 94046 Créteil Cedex (FR); MAUREL, Pascal, 94046 Créteil Cedex (FR); COUSIN, Frédéric, 94046 Créteil Cedex (FR); RANDRIAZANAMPARANY, Roland, 94046 Créteil Cedex (FR); VATAMANU, Lucian, 94046 Créteil Cedex (FR)
(74) Mandataire: Claassen, Maarten Pieter
(86) Numéro de dépôt international: PCT/EP2016/079959
(87) Numéro de publication internationale: WO 2017/097786

(56) Documents cités:
- EP-A1- 1 914 435
- DE-A1- 10 221 835
- DE-A1- 19 818 809
- DE-A1-102013 021 441
- US-A1- 2007 073 473
- US-A1- 2010 228 419
- ANDREAS KOLB ET AL: "Time-of-Flight Sensors in Computer Graphics", EUROGRAPHICS STATE OF THE ARTS REPORT,, 30 mars 2009 (2009-03-30), pages 119-134, XP007912829,
- SERGI FOIX ET AL: "Lock-in Time-of-Flight (ToF) Cameras: A Survey", IEEE SENSORS JOURNAL, IEEE SERVICE CENTER, NEW YORK, NY, US, vol. 11, no. 9, 1 septembre 2011 (2011-09-01), pages 1917-1926, XP011338023, ISSN: 1530-437X, DOI: 10.1109/JSEN.2010.2101060
- OLIVIER AYCARD ET AL: "Intersection safety using lidar and stereo vision sensors", INTELLIGENT VEHICLES SYMPOSIUM (IV), 2011 IEEE, IEEE, 5 juin 2011 (2011-06-05), pages 863-869, XP031999028, DOI: 10.1109/IVS.2011.5940518 ISBN: 978-1-4577-0890-9

## Description

### Domaine technique

L'invention se rapporte au domaine des véhicules automobiles et, plus particulièrement, aux véhicules comportant un système d'assistance au pilotage.

### Arrière-plan technologique

Dans l'état de la technique, il est connu des véhicules comportant un ou plusieurs systèmes de pilotage assisté pour des situations données. Par exemple, il existe des véhicules intégrant un système d'assistance au stationnement ou un système de régulation de la vitesse à une valeur de consigne définie par le conducteur. De tels systèmes sont adaptés à des situations bien précises, comme par exemple lors d'une manœuvre de stationnement en créneau ou en cas de circulation à grande vitesse sur une voie à grande vitesse. Chaque système d'assistance au pilotage est ainsi destiné à gérer une situation de pilotage donnée.

D'autres systèmes d'assistance sont décrits dans les documents US 2010/228419 A1 et DE 102 21 835 A1.

Les véhicules intégrant des systèmes d'assistance au pilotage comportent une pluralité de capteurs permettant de déterminer les conditions environnementales du véhicule. En fonction de ces conditions environnementales, les systèmes d'assistance au pilotage utilisent des actionneurs afin de contrôler les différents éléments du véhicule et piloter le véhicule sans intervention du conducteur.

Cependant, il n'existe pas à ce jour de système d'assistance au pilotage pour toutes les situations de circulation. Certaines conditions de circulation particulièrement fatigantes demeurent ainsi à ce jour à la charge du conducteur. Ainsi, par exemple, il n'existe à ce jour pas de système d'assistance au pilotage en cas de circulation dense sur les véhicules à boîte de vitesses manuelle.

Ainsi, en cas de circulation dense, le véhicule doit généralement alterner entre des phases d'arrêt et des phases de roulage. Le conducteur doit donc faire preuve d'une attention toute particulière pour anticiper en continu ces changements de phase liés aux variations de distance avec les véhicules qui le précèdent sur la route. Ce besoin d'attention est de plus accru dans le cadre d'une route présentant une pluralité de voies de circulation afin d'anticiper également les changements de voie de circulation des autres véhicules. Cette nécessité d'une attention constante est fatigante pour le conducteur.

En outre, l'alternance de phase d'arrêt et de phase de roulage impose au véhicule des phases d'accélération et des phases de décélération. Le conducteur doit donc alterner en permanence entre l'utilisation de la pédale d'accélération et l'utilisation de la pédale de frein, engendrant une fatigue supplémentaire. Cette fatigue est encore accrue dans le cas d'une boîte de vitesses manuelle puisque la gestion de la pédale d'embrayage est également nécessaire lors de ces phases d'accélération et de décélération.

Il existe donc un besoin d'assistance au pilotage dans les situations de trafic dense.

### Résumé

L'invention vise à remédier à ce problème en fournissant un dispositif d'assistance au pilotage permettant d'assister un conducteur en situation de trafic dense.

Pour cela, selon un premier objet, l'invention fournit un dispositif d'assistance à la conduite d'un véhicule selon la revendication 1.

Certains aspects du premier objet de l'invention partent de l'idée de fournir un dispositif d'assistance à la conduite en situation de trafic dense.

Certains aspects du premier objet de l'invention partent de l'idée de commander un moteur et un embrayage en fonction de données d'accélération en cas de trafic dense. Certains aspects du premier objet de l'invention partent de l'idée de fournir un contrôle d'embrayage apte à gérer une consigne une vitesse de véhicule inférieure au ralenti pour un rapport de boîte de vitesses donné.

Par ailleurs, pour pouvoir fournir des services d'assistance au pilotage qui soient fiables, il existe un besoin de systèmes capables de surveiller l'environnement du véhicule automobile et qui présentent un coût d'équipement aussi économique que possible.

Pour cela, selon un deuxième objet, l'invention fournit un dispositif d'assistance à la conduite pour véhicule automobile comportant
- une caméra apte à générer une première cartographie de l'environnement du véhicule automobile dans une première zone d'environnement frontale du véhicule entre une première distance minimale et une première distance maximale,
- un capteur temps de vol apte à générer une seconde cartographie de l'environnement du véhicule dans une seconde zone d'environnement frontale du véhicule entre une seconde distance minimale inférieure à la première distance minimale et une seconde distance maximale comprise entre la première distance minimale et la première distance maximale de sorte que la première zone d'environnement du véhicule et la seconde zone d'environnement du véhicule comportent une zone commune de l'environnement du véhicule,
- un module d'assistance à la conduite comportant :
   o une unité de fusion apte à générer une cartographie fine de l'environnement du véhicule dans une troisième zone d'environnement frontale du véhicule, la cartographie fine étant générée par l'unité de fusion en fonction de la première cartographie et de la seconde cartographie, la troisième zone d'environnement du véhicule comportant la réunion de la première zone d'environnement frontale du véhicule et de la seconde zone d'environnement frontale du véhicule,
   o une unité de calcul de déplacement apte à générer une consigne d'accélération du véhicule en fonction de la cartographie fine de l'environnement du véhicule.

Un tel dispositif d'assistance à la conduite exploite avantageusement les capacités des différents capteurs afin de générer une cartographie fine de l'environnement du véhicule en combinant les données sur l'environnement du véhicule obtenues par différents organes de détection de l'environnement. L'analyse de cette cartographie fine sur une zone étendue permet ainsi de déterminer les déplacements des véhicules proches en cas de trafic dense et donc de générer une consigne de d'accélération du véhicule en conséquence. En outre, ce dispositif d'assistance à la conduite permet d'utiliser des capteurs adaptés à la zone de l'environnement du véhicule à traiter. En l'occurrence, en situation de trafic dense, l'environnement du véhicule à analyser afin de calculer la consigne d'accélération doit s'étendre depuis une zone très proche du véhicule jusqu'à une portée limitée, par exemple de l'ordre d'une quarantaine de mètres. De tels capteurs peuvent ainsi être simple et peu onéreux comme c'est le cas d'un capteur temps de vol.

Selon d'autres modes de réalisation avantageux, un tel dispositif d'assistance à la conduite peut présenter une ou plusieurs des caractéristiques suivantes :
- le dispositif comporte en outre un capteur ultrason apte à générer une troisième cartographie de l'environnement du véhicule dans une quatrième zone d'environnement du véhicule entre une troisième distance minimale inférieure à la seconde distance minimale et une troisième distance maximale comprise entre la seconde distance minimale et la première distance maximale.
- l'unité de fusion du module d'assistance à la conduite est apte à générer la cartographie fine de l'environnement frontal du véhicule à partir des première, seconde et troisième cartographies, la troisième zone d'environnement du véhicule comportant la réunion des première, seconde et quatrième zones d'environnement frontales du véhicule.
- Le module d'assistance à la conduite comporte un module de ciblage apte à sélectionner la cible à suivre parmi un ensemble d'obstacles de l'environnement du véhicule répertoriés par la cartographie fine.
- l'unité de calcul de déplacement est apte à calculer une distance séparant le véhicule de la cible sélectionnée.
- l'unité de calcul de déplacement est apte à générer la consigne d'accélération du véhicule en fonction de la distance séparant le véhicule de la cible sélectionnée.
- l'unité de calcul de déplacement est apte à calculer une vitesse et une accélération de la cible sélectionnée. Ce calcul de la vitesse et de l'accélération de la cible sélectionnée peut être réalisé de nombreuses manières. Dans un mode de réalisation, l'unité de calcul de déplacement est apte à calculer une vitesse et une accélération de la cible sélectionnée par dérivation de la distance entre le véhicule et la cible sélectionnée. En variante, la vitesse et l'accélération de la cible sélectionnée peuvent être calculées par un filtrage de Kalman avec un modèle type vitesse constante qui permet par exemple d'observer la vitesse par rapport à la position.
- L'unité de calcul de déplacement est apte à calculer la consigne d'accélération du véhicule en fonction de l'accélération de la cible sélectionnée.
- Le capteur temps de vol peut être réalisé de nombreuses manières. Ainsi, le capteur temps de vol peut par exemple être un capteur laser, fonctionnant par exemple dans l'infrarouge.
- l'unité de fusion est apte à associer ensemble l'un parmi des objets répertoriés par la première cartographie et un objet correspondant parmi des objets répertoriés par la seconde cartographie et à déterminer une position d'un objet dans la cartographie fine correspondant auxdits objets associés de la première cartographie et de la seconde cartographie.
- l'unité de fusion est apte à générer une cartographie fine de l'environnement du véhicule répertoriant un ensemble d'objets mobiles et un marquage au sol de l'environnement du véhicule,
- l'unité de calcul de déplacement est apte à générer une consigne de déplacement latéral en fonction du marquage au sol répertorié par la cartographie fine. Dans un mode de réalisation, l'unité de calcul de déplacement est apte à générer une consigne de déplacement latéral en fonction du marquage au sol répertorié par la cartographie fine et/ou de marquages virtuels générés à partir de l'interprétation de l'environnement du véhicule par exemple par perception d'éléments fixes tels que des barrières, des traces de véhicules, d'informations sur la cartographie de la route (rayon de courbure, nombre de voies, etc.) ou autre.
- le dispositif d'assistance à la conduite comporte en outre une interface homme machine,.
- l'interface homme machine comporte un moyen d'information d'un conducteur configuré pour émettre un signal de détection de conditions d'entrée du procédé d'assistance à la conduite, la condition d'entrée dans le procédé d'assistance à la conduite comportant en outre l'activation d'un organe d'activation par le conducteur.
- Le dispositif d'assistance à la conduite comporte en outre un capteur d'activation de pédale du véhicule.
- le module d'assistance à la conduite est en outre configuré pour :
   o détecter une condition de sortie du procédé d'assistance à la conduite (35), la condition de sortie comportant une condition d'activation d'une pédale du véhicule, la condition d'activation de pédale du véhicule étant satisfaite lorsqu'un utilisateur appui sur l'une parmi la pédale d'accélération du véhicule et la pédale d'embrayage du véhicule,
   o terminer le procédé d'assistance à la conduite lorsque la condition de sortie est satisfaite.

Certains aspects du deuxième objet de l'invention partent de l'idée de générer une cartographie de l'environnement du véhicule à partir d'une pluralité de capteurs présentant des caractéristiques distinctes. Certains aspects du deuxième objet de l'invention partent de l'idée d'utiliser une pluralité de capteurs simples et peu onéreux pour réaliser une cartographie précise de l'environnement du véhicule sur une zone étendue. Certains aspects du deuxième objet de l'invention partent de l'idée de fournir une consigne d'accélération en fonction de données environnementale dans le cadre d'un trafic dense. Certains aspects du deuxième objet de l'invention partent de l'idée de fournir un dispositif d'assistance au pilotage en cas de trafic dense apte à gérer la circulation sur une route présentant une pluralité de voies de circulation.

### Brève description des figures

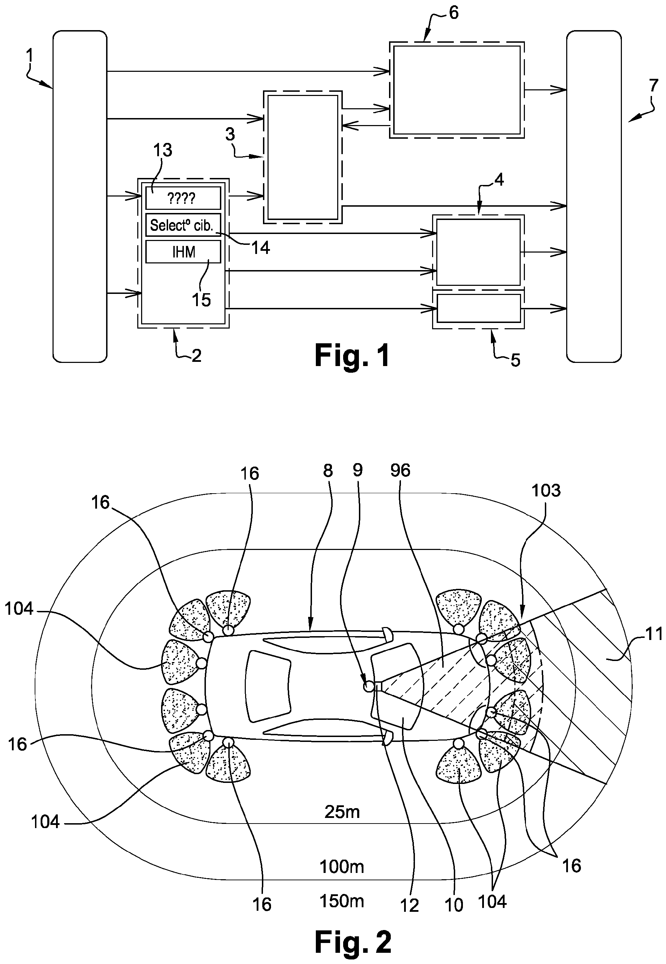

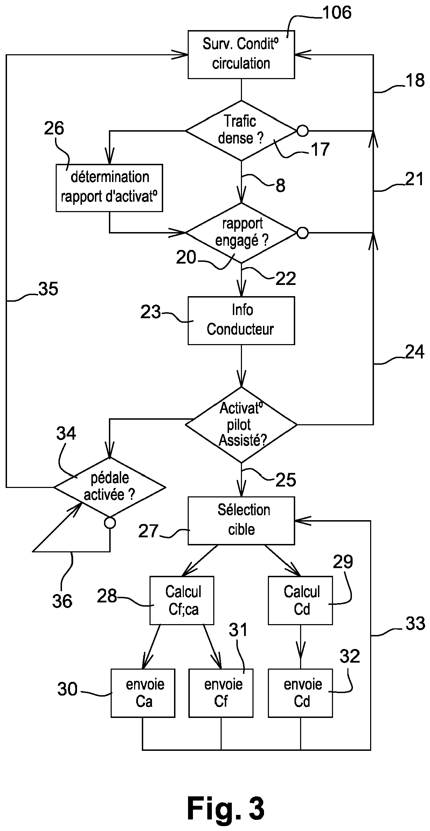

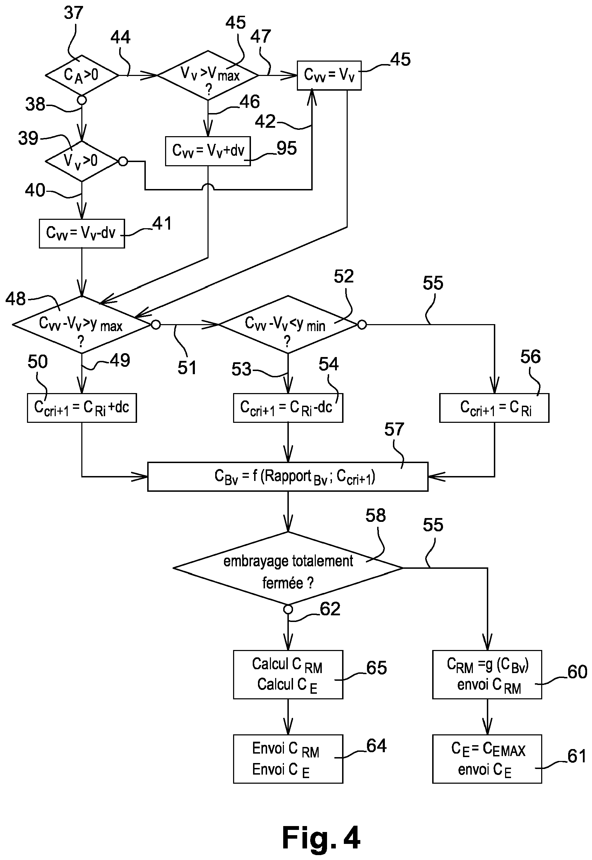

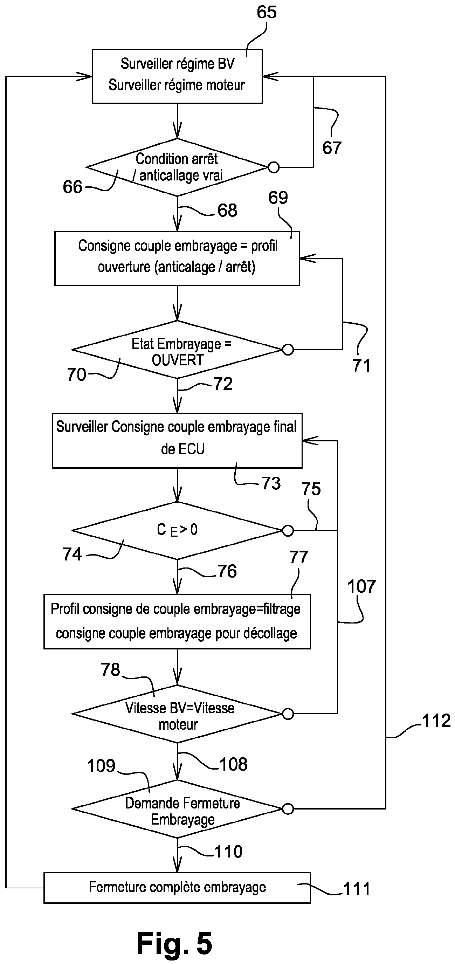

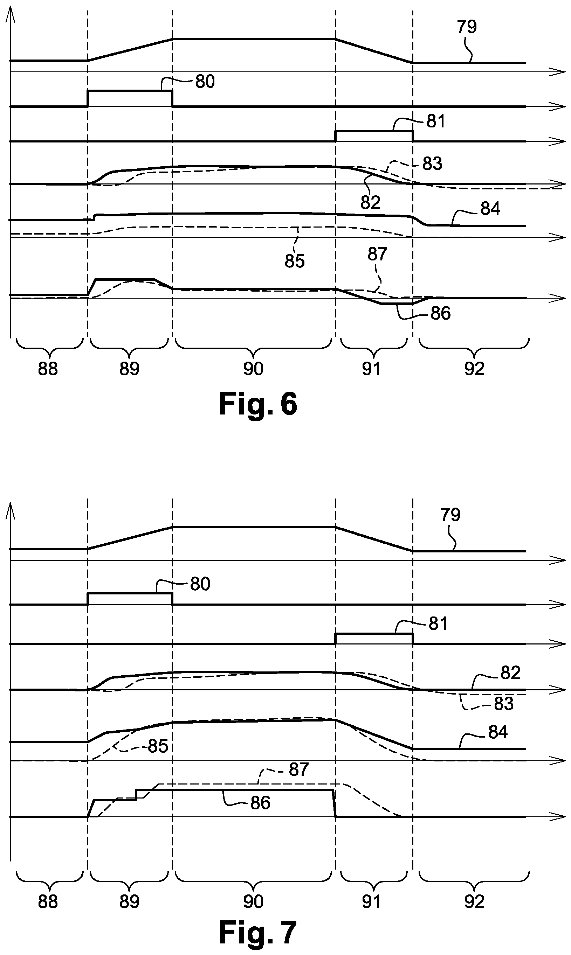

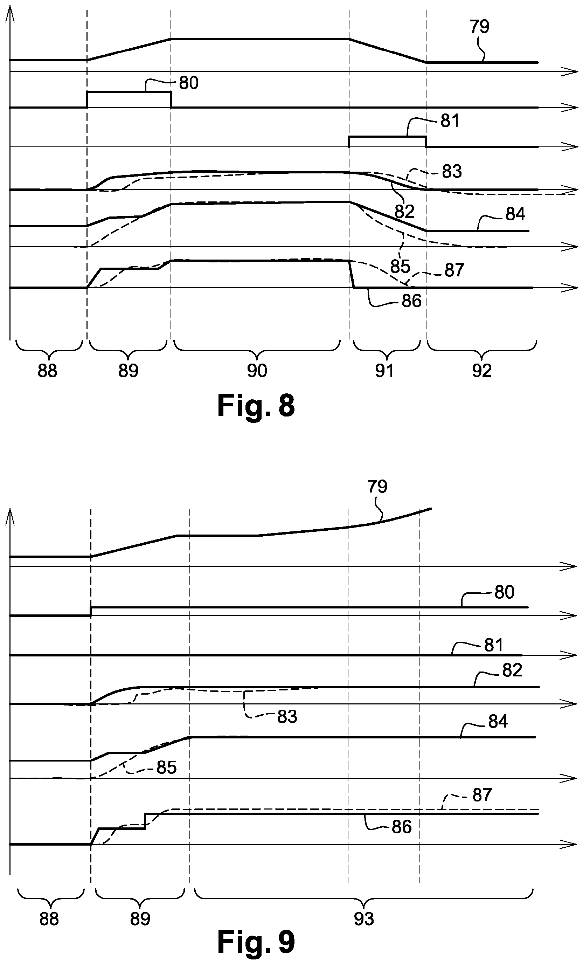

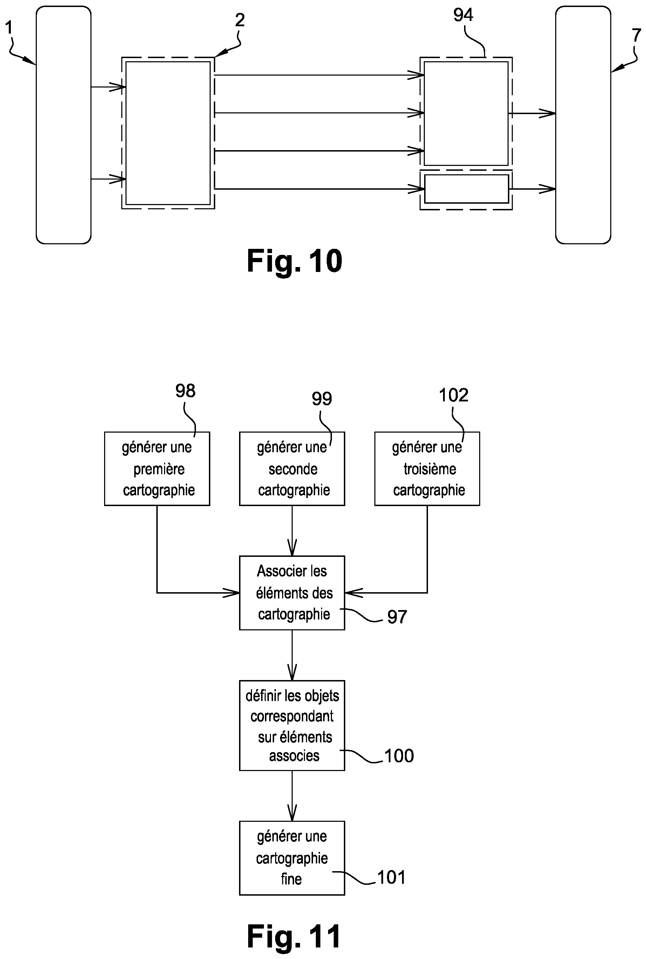

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux dessins annexés.
- **La** **figure 1** est une représentation schématique d'un système d'assistance à la conduite en situation de trafic dense pour un véhicule comportant une boîte de vitesses manuelle.
- **La** **figure 2** est une représentation schématique d'un véhicule comportant une pluralité de capteurs d'un système d'assistance à la conduite en situation de trafic dense.
- **La** **figure 3** est un organigramme illustrant le procédé de fonctionnement d'un module d'assistance à la conduite en situation de trafic dense de la figure 1.
- **La** **figure 4** est un organigramme illustrant le procédé de fonctionnement d'un organe de contrôle moteur de la figure 1.
- **La** **figure 5** est un organigramme illustrant le procédé de fonctionnement d'un organe de contrôle d'embrayage de la figure 1.
- **La** **figure 6** illustre le comportement des différents organes du véhicule en pilotage assisté successivement lors d'un démarrage, en condition de roulage à une vitesse inférieure à la vitesse de ralenti pour le rapport de boîte de vitesses engagé, et lors d'un arrêt du véhicule.
- **La** **figure 7** illustre le comportement des différents organes du véhicule en pilotage assisté successivement lors d'un démarrage, en condition de roulage avec un embrayage totalement fermé, et lors d'un arrêt du véhicule. Avec une condition de vitesse véhicule correspondant à un régime moteur supérieur au régime de ralenti
- **La** **figure 8** illustre le comportement des différents organes du véhicule en pilotage assisté successivement lors d'un démarrage, en condition de roulage avec une consigne de couple embrayage suivant la consigne de couple moteur, et lors d'un arrêt du véhicule. Avec une condition de vitesse véhicule correspondant à un régime moteur supérieur au régime de ralenti
- **La** **figure 9** illustre le comportement des différents organes du véhicule en pilotage assisté successivement lors d'un démarrage puis en condition de roulage à une vitesse supérieure à la vitesse maximale du véhicule pour le rapport de boîte de vitesses engagé.
- **La** **figure 10** est une représentation schématique d'un système d'assistance à la conduite en situation de trafic dense pour un véhicule comportant une boîte de vitesses automatique.
- **La** **figure 11** est un organigramme illustrant la fusion de cartographies générées par des capteurs distincts.

### Description détaillée de modes de réalisation

La structure d'un dispositif d'assistance à la conduite en situation de trafic dense pour un véhicule comportant une boîte de vitesses manuelle est illustrée en regard des figures 1 et 2.

Comme illustré sur la figure 1, un dispositif d'assistance à la conduite en situation de trafic dense comporte une pluralité de capteurs 1 connectés à un module d'assistance à la conduite 2. Ce module d'assistance à la conduite 2 est connecté à un organe de contrôle moteur 3, un organe de contrôle de freinage 4 et un organe de contrôle de la direction 5. Par ailleurs, l'organe de contrôle moteur 3 est également connecté à un organe de contrôle de l'embrayage 6. Chaque organe de contrôle 3 à 6 est en outre connecté à des actionneurs 7 respectifs. Ces actionneurs 7 sont aptes à configurer les différents éléments du véhicule 8 en fonction d'instructions déterminées par les organes de contrôle 3 à 6. Des actionneurs sont prévus afin de, par exemple, réguler le régime moteur en fonction d'une consigne de régime moteur, régler le couple transmissible par l'embrayage en fonction d'une consigne d'embrayage, régler la position des organes de freinage en fonction d'une consigne de freinage, etc. Le fonctionnement des différents organes 3 à 6 est décrit ci-après en regard des figures 3 à 9.

La figure 2 est une représentation schématique d'un véhicule 8 comportant une pluralité de capteurs 1. Ces capteurs 1 sont destinés à détecter les différents éléments de l'environnement du véhicule 8, comme par exemple d'autres véhicules automobiles circulant sur la même voie de circulation ou sur des voies de circulation adjacentes (non illustrées).

Ces capteurs 1 comportent une caméra 9. Cette caméra 9 est installée dans l'habitacle du véhicule 8 au niveau du pare-brise avant 10. La caméra 9 présente un champ de vision 11 orienté vers l'avant du véhicule 8. La caméra 9 permet de détecter et d'identifier les objets se trouvant à l'avant du véhicule 8. Le champ de vision 11 de la caméra 9 a par exemple une portée de 100m sur un angle frontal d'environ 50° à 55°. Cette caméra permet de détecter les objets dynamiques, c'est à dire en mouvement, dans le champ de vision 11 mais également les objets fixes tels que par exemple les panneaux de signalisation, des véhicules arrêtés ou encore les marquages au sol. Une telle caméra 9 est par exemple une caméra mono de type CMOS avec une résolution de 1280*800 pixels présentant un champ d'ouverture horizontal de 54° et un champ vertical de 34°.

Les capteurs 1 comportent également un capteur temps de vol comme par exemple qu'un capteur d'obstacle 12 à infrarouge ou à laser. Ce capteur d'obstacle 12 est également situé au niveau du pare-brise avant 10 du véhicule 8 et orienté vers l'avant du véhicule 8. Ce capteur d'obstacle 12 est par exemple un capteur LED fonctionnant sur le principe des capteurs temps de vol. Un tel capteur d'obstacle 12 émet un signal lumineux et calcule le temps nécessaire audit signal pour atteindre un obstacle. Le capteur d'obstacle 12 permet de détecter les objets dans un champ de vision 96 s'étendant sur l'avant du véhicule 8 depuis 0.1m jusqu'à environ 60 mètres de distance. Ce champ de vision 96 s'étend par exemple sur un angle horizontal de 45° à 60° et sur un angle vertical de 7.5°. Un tel capteur temps de vol ne présente pas de zone morte entre ledit capteur temps de vol et sa portée de détection maximale. En outre, un tel capteur temps de vol fonctionne quelle que soit la luminosité ambiante. Ce capteur temps de vol permet donc de détecter les obstacles y compris lorsqu'ils sont très proches du véhicule 8.

Ce type de caméra 9 et de capteur d'obstacle 12 présentent l'avantage d'être peu complexes et donc facilement intégrés au véhicule 8. De par leur simplicité, ces éléments présentent en outre l'avantage d'être peu onéreux et peuvent donc être installés sur tous types de véhicules y compris sur les véhicules d'entrée de gamme. En outre, ces capteurs présentent des caractéristiques de détection différentes. Ainsi, une première cartographie générée par la caméra 9 (étape 98 illustrée sur la figure 11) et une seconde cartographie générée par le capteur d'obstacle 12 (étape 99 illustrée sur la figure 11). Typiquement, la première cartographie répertorie les objets présents dans le champ de vision 11 et la seconde cartographie répertorie les objets présents dans le champ de vision 96 du capteur d'obstacle 12.

Le module d'assistance à la conduite 2 comportant un module de fusion et détection 13. Ce module de fusion et détection 13 est connecté aux capteurs 1 afin de recevoir les données relatives à la présence d'objets en amont du véhicule 8, typiquement les première et seconde cartographies de l'environnement du véhicule 8. Le module de fusion et détection 13 analyse les données reçues depuis les capteurs 1 afin de définir précisément les conditions environnementales du véhicule 8.

Un exemple de procédé de fusion de cartographies d'environnement est décrit dans le document « intersection safety using Lidar and stereo vision sensors » de Olivier AYCARD, Qadeer BAIG, Siviu BOTA, Fawzi NASHASHIBI, Sergiu NEDEVSCHI, Cosmin PANTILIE, Michel PARENT, Paulo RESENDE et Trung-Dung Vu publié en 2011. Comme illustré sur la figure 11, et en regard du point VI de l'article cité ci-dessus, la fusion de la première cartographie comporte une étape 97 d'association des objets détectés dans la première cartographie et des objets détectés dans la seconde cartographie. Une étape 100 de fusion permet de définir avec un degré de précision accru les objets associés de la première cartographie et de la seconde cartographie en recoupant les positions des objets associés identifiés dans la première cartographie et dans la seconde cartographie. Une cartographie fine est ainsi générée (étape 101) à partir des éléments présents uniquement dans l'une des cartographies et des éléments définis lors de l'étape de fusion 100. Cette cartographie fine permet de répertorier les objets présents dans un zone étendue 103 de l'environnement du véhicule 8 réunissant les objets détectés à la fois dans le champ de vision 11 de la caméra 9 et dans le champ de vision 96 du capteur 12. Il est ainsi possible d'obtenir une cartographie fine de l'environnement du véhicule 8 listant la position des objets détectés, leur statut fixe ou dynamique ainsi qu'une information sur les capteurs ayant détecté cet objet, seuls ou en combinaison.

Le module de fusion 13 permet également de déterminer la distance entre le véhicule 8 et les différents objets de la cartographie fine. En outre, le module de fusion 13 peut calculer la vitesse et l'accélération des différents objets de la cartographie fine. La vitesse et l'accélération de chaque objet est par exemple obtenue par dérivation temporelle de la distance entre le véhicule 8 et ledit objet. Le module d'assistance à la conduite 2 est ainsi apte à déterminer si le véhicule 8 circule dans des conditions de trafic dense en détectant une pluralité d'objets se déplaçant à une vitesse réduite dans l'environnement du véhicule 8 et des obstacles. Une situation de trafic dense peut ainsi être détectée dans le cas, par exemple, d'un véhicule se déplaçant à une vitesse comprise entre 0km/h et 30 à 40 km/h en amont du véhicule 8, et situé à une distance proche du véhicule 8.

Le module d'assistance à la conduite 2 comporte en outre un module de sélection de cible 14. Ce module de sélection de cible permet de sélectionner un objet de l'environnement identifié dans la cartographie fine par le module de fusion et détection 13 et de déterminer une pluralité d'informations concernant l'objet ciblé. Ainsi, le module de sélection de cible permet, par exemple, de cibler un véhicule situé en amont sur la voie de circulation.

Le module d'assistance à la conduite 2 comporte en outre une interface homme-machine 15 permettant d'activer un mode de pilotage assisté dans lequel le conducteur n'a pas besoin de contrôler le véhicule 8. Cette interface homme-machine 15 peut être réalisée de nombreuses manières. L'interface homme machine comporte avantageusement un moyen de détection de conditions d'activation, un moyen d'information et un moyen d'activation (non illustrés). Dans un mode de réalisation, le moyen de détection de conditions d'activation comporte un capteur de rapport de boîte de vitesses, un capteur d'inclinaison de la route, un capteur d'état des capteurs apte à déterminer le bon état de fonctionnement des capteurs, et/ou un capteur d'état des organes de contrôle moteur 3 et de contrôle d'embrayage apte à vérifier l'état de fonctionnement de ces organes. Dans un mode de réalisation, le moyen d'information comporte un voyant lumineux situé sur le tableau de bord ainsi qu'un émetteur sonore. Dans un mode de réalisation, le moyen d'activation comporte un bouton dédié. Dans un mode de réalisation, le moyen d'activation comporte une interface graphique multimédia et tactile.

Dans un perfectionnement, comme illustré sur la figure 2, le véhicule 8 comporte en outre une pluralité de capteurs à ultrasons 16. De tels capteurs à ultrasons 16 sont répartis de façon régulière sur les faces avant et arrière du véhicule 8. Dans un mode de réalisation, les capteurs à ultrasons 16 sont également disposés de chaque côté du véhicule 8 à l'avant et à l'arrière du véhicule 8. En outre, certains capteurs à ultrasons 16 peuvent être installés sur les faces latérales avant et arrière du véhicule 8. Ces capteurs à ultrasons 16 détectent la présence d'un obstacle sur une courte portée, de l'ordre de quelques mètres. Ces capteurs à ultrasons 16 sont particulièrement utiles dans le cadre d'une route présentant une pluralité de voies de circulation afin de détecter lorsqu'un véhicule circulant sur une voie de circulation adjacente se déporte sur la voie de circulation du véhicule 8. Comme illustré sur la figure 11, ces capteurs à ultrasons génèrent une troisième cartographie de l'environnement du véhicule 8 (étape 102) dans une zone proche du véhicule 104 (voir figure 2). L'étape d'association des éléments cartographiés (étape 97) est alors avantageusement réalisée sur les première, seconde et troisième cartographie, améliorant encore la précision de la cartographie fine.

Le fonctionnement général du module d'assistance à la conduite 2 ainsi que l'activation du mode pilotage assisté en fonction de conditions prédéterminées est décrite ci-après en regard de la figure 3.

Le module d'assistance à la conduite 2 surveille en continu les conditions de circulation à l'aide des capteurs 1 (étape 106). Pour cela, le module d'assistance à la conduite génère une cartographie fine de l'environnement du véhicule 8 à l'aide des capteurs 9, 12, 16 et du module de fusion 13, cette cartographie fine répertoriant les objets de l'environnement du véhicule 8 ainsi que leurs vitesse et accélération.

Le module d'assistance à la conduite 2 teste (étape 17) si des conditions de trafic dense sont détectées en analysant la cartographie fine générée par le module de fusion 13. Si les conditions de circulation détectées ne correspondent pas à des conditions de circulation en trafic dense (étape 18), le module d'assistance à la conduite 2 continue sa surveillance (étape 16).

Si un trafic dense est détecté (étape 19), le module d'assistance à la conduite 2 détermine si les conditions pour passer en pilotage assisté sont remplies. Pour cela, le module d'assistance au pilotage 2 analyse le rapport de la boîte de vitesses engagé (étape 20). Si le rapport de boîte de vitesses engagé ne correspond pas à un rapport d'activation du pilotage assisté (étape 21), alors le module d'assistance à la conduite 2 continue sa surveillance de l'environnement du véhicule (étape 16).

Si le rapport de boîte de vitesses correspond à un rapport permettant l'activation du pilotage assisté (étape 22), alors le module d'assistance à la conduite informe le conducteur de la possibilité d'activation du pilotage assisté, par exemple à l'aide d'un voyant lumineux sur le tableau de bord ou d'un signal sonore (étape 23) ou à l'aide de l'apparition ou du changement d'état d'un pictogramme sur une interface multimédia. De préférence, le rapport de boîte de vitesses permettant l'activation du mode de pilotage assisté est le second rapport de la boîte de vitesses détecté à l'aide d'un capteur de rapport de boîte de vitesses engagé. Le module d'assistance au pilotage passe alors en attente de l'activation du pilotage assisté par le conducteur. Si le conducteur n'active pas le pilotage assisté (étape 24), le module d'assistance à la conduite 2 continue sa surveillance de l'environnement (étape 16). Si le conducteur active le pilotage assisté (étape 25), par exemple en appuyant sur un bouton ou sur un pictogramme d'une interface tactile, dédié, alors le module d'assistance à la conduite entre dans un mode de fonctionnement en pilotage assisté (étapes 27 à 33).

Dans un perfectionnement, l'étape de test du rapport engagé (20) comporte en outre la détermination du rapport correspondant au rapport d'activation du pilotage assisté (étape 26). Pour cela, le module d'assistance à la conduite 2 détermine l'inclinaison de la voie de circulation à l'aide d'un capteur d'inclinaison. Le module d'assistance à la conduite détermine alors que le rapport de boîte de vitesses permettant l'activation du pilotage assisté est le second rapport de la boîte de vitesses lorsque le véhicule 8 circule sur une route plane ou présentant une pente négative et le premier rapport de la boîte de vitesses lorsque le véhicule circule sur une route présentant une inclinaison positive. Un tel capteur d'inclinaison peut également permettre de déterminer le profil de décollage du véhicule 8.

Dans un perfectionnement non illustré, les conditions pour passer en pilotage assisté comportent en outre une étape de vérification de l'état de fonctionnement des capteurs et une étape de vérification de l'état de fonctionnement de l'organe de contrôle moteur et de l'organe de contrôle d'embrayage. Dans un perfectionnement, lorsque des conditions de trafic dense sont détectées mais que le rapport de boîte de vitesse engagé ne correspond pas à celui requis pour passer en mode de pilotage assisté, le module d'assistance à la conduite 2 informe le conducteur que des conditions environnementales pour passer en mode de pilotage sont réunies et qu'il peut engager le rapport de boîte de vitesse demandé pour passer en mode de pilotage assisté.

Lorsque le pilotage assisté est activé, le module de sélection de cible 14 détermine une cible à suivre, c'est-à-dire un véhicule en amont du véhicule 8 sur la voie de circulation (étape 27). Le module d'assistance à la conduite 2 calcule alors une consigne d'accélération et une consigne de freinage en fonction du véhicule cible, (étape 28). Typiquement, la consigne d'accélération et la consigne de freinage sont calculées en fonction de la distance séparant le véhicule 8 du véhicule cible, de la vitesse du véhicule cible ainsi que de l'accélération du véhicule cible. En outre, le module d'assistance à la conduite 2 calcule une consigne de direction du véhicule 8 (étape 29). Ce calcul de la consigne de direction est réalisé à l'aide de capteurs 1 détectant la direction prise par la voie de circulation, par exemple à l'aide de la reconnaissance de lignes par le traitement d'image de la caméra. Ainsi, le module d'assistance au pilotage 2 peut contrôler automatiquement les déplacements latéraux et longitudinaux du véhicule 8, par exemple pour une vitesse allant jusqu'à 40km/h. Dans un mode de réalisation, le module d'assistance au pilotage 2 peut contrôler les déplacements longitudinaux du véhicule 8 en fonction du rapport de boîte de vitesses engagé. Par exemple, le module d'assistance au pilotage peut contrôler les déplacements longitudinaux entre 0 et 15 km/h pour le premier rapport de boîte de vitesses et entre 0 et 30 km/h pour le second rapport de boîte de vitesse.

La consigne d'accélération est alors envoyée à l'organe de contrôle moteur 3 (étape 30). De même, la consigne de freinage est envoyée à l'organe de contrôle des freins (étape 31) et la consigne de direction est envoyée à l'organe de contrôle de direction (étape 32). Les différents organes 3 à 6 activent alors les actionneurs correspondant afin de piloter le véhicule automatiquement, c'est-à-dire sans intervention du conducteur, en fonction des consignes du module d'assistance à la conduite 2 et le module d'assistance au pilotage commence alors une nouvelle itération de pilotage assisté en retournant (étape 33) à la sélection d'une cible à suivre (étape 27).

Par ailleurs, le module d'assistance à la conduite 2 teste en continu les conditions de sortie du pilotage assisté. Dans un mode de réalisation, ces conditions de sortie du pilotage assisté comportent un test d'activation d'une pédale du véhicule 8 (étape 34) à l'aide d'un capteur de position des pédales du véhicule 8. Ainsi, si le conducteur appuie sur la pédale d'embrayage, la pédale d'accélération ou la pédale de frein, ce capteur détecte un changement de position de la pédale correspondante et désactive le pilotage assisté (étape 35). Le module d'assistance à la conduite 2 retourne alors à l'étape de surveillance de l'environnement du véhicule (étape 16). Inversement, si aucune pédale n'est activée, le module d'assistance à la conduite reste en attente d'une instruction de sortie de pilotage assisté (étape 36).

Dans un mode de réalisation non illustré, les conditions de sortie de pilotage assisté comportent en outre une détection de changement de position du volant, une détection d'un changement de rapport de boîte de vitesse ou tout autre action du conducteur sur un organe de contrôle du véhicule. Dans un perfectionnement, l'instruction de sortie de pilotage assisté est également soumise à une étape de comparaison avec un seuil. Par exemple, l'instruction de sortie de pilotage assisté n'est exécutée que si l'action du conducteur sur un organe de contrôle du véhicule dépasse une durée déterminée ou encore dépasse un certain seuil tel qu'un seuil de freinage ou encore un seuil d'accélération. Lorsque le conducteur actionne un organe de contrôle du véhicule, le procédé d'assistance au pilotage est interrompu et, si le seuil n'est pas dépassé, le procédé d'assistance au pilotage est automatiquement réactivé dès lors que le conducteur n'agit plus sur l'organe de contrôle du véhicule. En variante, il est possible de ne désactiver qu'une partie du procédé d'assistance au pilotage en fonction de l'organe sur lequel le conducteur agit. Par exemple, si le conducteur actionne la pédale de frein, seul le contrôle longitudinal du véhicule est désactivé, le contrôle latéral du véhicule étant toujours piloté par le procédé d'assistance au pilotage. Inversement, si le conducteur actionne le volant, seul le contrôle latéral du véhicule est désactivé, le procédé d'assistance au pilotage continuant à piloter la vitesse et l'accélération du véhicule.

Lorsque l'organe de contrôle des freins reçoit une consigne de freinage, il envoie une instruction de positionnement de l'organe de freinage à un actionneur ad hoc afin de ralentir le véhicule 8 en fonction de la consigne de freinage. Dans un mode de réalisation non illustré, l'organe de contrôle des freins pourrait être piloté par un module indépendant du module d'assistance à la conduite 2, par exemple par un dispositif de type ESP.

De même, lorsque l'organe de contrôle de direction reçoit une consigne de direction, il envoie une instruction correspondante à un ou des actionneurs permettant d'orienter la colonne de direction du véhicule 8 en fonction de la consigne de direction.

Le fonctionnement de l'organe de contrôle moteur est maintenant décrit en regard de la figure 4.

L'organe de contrôle moteur 3 analyse toute consigne d'accélération qu'il reçoit du module d'assistance au pilotage 2. Lors d'une première série de calculs, l'organe de contrôle moteur 3 définit une consigne de vitesse du véhicule en fonction de la consigne d'accélération reçue, de la vitesse actuelle du véhicule ainsi que de la vitesse maximale du véhicule pour le rapport de boîte de vitesses engagé.

Dans un premier temps, l'organe de contrôle moteur teste si la consigne d'accélération est positive (étape 37), c'est-à-dire si la consigne d'accélération correspond à une demande de décélération du véhicule 8.

Si la consigne d'accélération est négative (étape 38), alors l'organe de contrôle moteur 3 teste la vitesse actuelle du véhicule (étape 39). Si la vitesse actuelle du véhicule est non nulle (étape 40), alors l'organe de contrôle moteur 3 définit une consigne de vitesse véhicule égale à la vitesse actuelle du véhicule décrémentée d'une valeur de vitesse prédéterminée (étape 41). Si au contraire la vitesse actuelle du véhicule est nulle (étape 42), alors l'organe de contrôle moteur 3 définit une consigne de vitesse véhicule égale à la vitesse actuelle du véhicule (étape 43), c'est-à-dire une consigne de vitesse nulle.

Si la consigne d'accélération est positive (étape 44), c'est-à-dire que le véhicule doit accélérer, alors l'organe de contrôle moteur 3 compare la vitesse actuelle du véhicule à la vitesse maximale possible pour le rapport de boîte de vitesses engagé (étape 45). Si la vitesse actuelle du véhicule est inférieure à la vitesse maximale du véhicule pour le rapport de boîte de vitesses engagé (étape 46), alors l'organe de contrôle moteur 3 définit une consigne de vitesse de véhicule égale à la vitesse actuelle du véhicule incrémentée d'une valeur de vitesse prédéterminée (étape 95). Si au contraire la vitesse actuelle du véhicule est supérieure ou égale à la vitesse maximale du véhicule pour le rapport de boîte de vitesses engagé (étape 47), alors l'organe de contrôle moteur 3 définit une consigne de vitesse véhicule égale à la vitesse actuelle du véhicule (étape 43), c'est-à-dire égale à la vitesse maximale du véhicule pour le rapport engagé.

Après avoir défini une consigne de vitesse véhicule, l'organe de contrôle moteur 3 calcule une consigne de couple moteur pour atteindre la consigne de vitesse véhicule. Pour cela, l'organe de contrôle moteur teste si le différentiel entre la consigne de vitesse véhicule et la vitesse actuelle du véhicule est supérieure à un écart positif prédéfini (étape 48). Si le différentiel entre la consigne de vitesse véhicule et la vitesse actuelle du véhicule est supérieure à l'écart positif (étape 49), alors l'organe de contrôle moteur 3 définit une consigne de couple roues, égale au couple roue actuel incrémenté d'une valeur de couple prédéterminée (étape 50). Dans le cas contraire (étape 51), l'organe de contrôle moteur 3 teste si le différentiel entre la consigne de vitesse véhicule et la vitesse est inférieur à un écart positif prédéfini (étape 52). Si le différentiel entre la consigne de vitesse véhicule et la vitesse actuelle du véhicule est inférieur audit écart négatif (étape 53), alors l'organe de contrôle moteur 3 définit une consigne de couple de roue égale au couple roue actuel décrémentée de la valeur de couple prédéterminée (étape 54). Sinon (étape 55), c'est-à-dire que la consigne de vitesse véhicule est sensiblement égale à la vitesse actuelle du véhicule, alors l'organe de contrôle moteur définit 3 une consigne de couple de roue égale au couple roue actuel (étape 56).

Après avoir défini une consigne de couple de roue, l'organe de contrôle moteur 3 définit une consigne de couple d'arbre d'entrée de boîte de vitesses (étape 57) en fonction de la consigne de couple de roue et du rapport de boîte de vitesses engagé égale à la consigne de couple de roue divisée par le rapport de transmission de la boîte de vitesses.

Enfin, lors d'une dernière série d'étapes, l'organe de contrôle moteur 3 détermine une consigne de régime moteur et une consigne de couple final transmissible par l'embrayage permettant d'obtenir le couple d'entrée de boite de vitesses correspondant. Pour cela, l'organe de contrôle moteur 3 teste l'état actuel de l'embrayage (étape 58). Si l'embrayage est dans un état totalement fermé (étape 59), alors l'organe de contrôle moteur 3 calcule une consigne de régime moteur et envoie cette consigne à un actionneur du moteur (étape 60). L'actionneur du moteur régule alors le régime moteur en selon la consigne de régime moteur. En outre, l'organe de contrôle moteur 3 génère une consigne d'embrayage correspondant à une fermeture complète de l'embrayage et envoie ladite consigne d'embrayage à l'organe de contrôle d'embrayage 6 (étape 61). Si l'embrayage n'est pas totalement fermé (étape 62), c'est-à-dire que le couple de l'arbre moteur n'est pas ou pas intégralement transmis à l'arbre d'entrée de la boîte de vitesses, alors l'organe de contrôle moteur 3 calcule une consigne de régime moteur nécessaire à l'obtention du couple d'arbre d'entrée de boîte de vitesses ainsi que la consigne d'embrayage (étape 63). Ce calcul est effectué à l'aide d'une cartographie stockée en mémoire de l'organe de contrôle moteur 3 (étape 63). Cette cartographie définit pour chaque couple d'arbre d'entrée de boîte de vitesses une consigne de régime moteur minimal et une consigne de couple transmissible par l'embrayage correspondant. L'organe de contrôle moteur envoie alors à l'actionneur du moteur la consigne de régime moteur à appliquer. En parallèle, l'organe de contrôle moteur envoie à l'organe de contrôle d'embrayage 6 la consigne de couple finale transmissible par l'embrayage calculée à l'aide de la cartographie (étape 64). Le contrôle d'embrayage détermine la trajectoire temporelle à suivre pour atteindre cette valeur finale de consigne de couple transmissible. L'actionneur du moteur régule le régime moteur en fonction de la consigne de régime moteur.

L'organe de contrôle moteur 3 effectue les étapes 37 à 64 pour chaque consigne d'accélération reçue, c'est-à-dire qu'après avoir envoyé la consigne de régime moteur et la consigne d'embrayage, l'organe de contrôle moteur retourne à l'étape de test de la consigne d'accélération (étape 37).

Ainsi, lorsque le couple à transmettre par l'embrayage est supérieur au couple maximal transmissible par l'embrayage au régime moteur ralenti, l'organe de contrôle moteur 3 pilote le régime moteur en maintenant l'embrayage dans une position de couple transmissible maximale afin d'atteindre le couple d'embrayage cible. Inversement, lorsque le couple à transmettre par l'embrayage est inférieur au couple maximal transmissible par l'embrayage au régime moteur ralenti, typiquement lors d'une phase d'arrêt ou de décollage du véhicule 8, le contrôle du déplacement du véhicule est réalisé en appliquant un régime moteur constant et en régulant la grandeur physique pilotant le couple d'embrayage afin que l'embrayage transmette à l'arbre d'entrée de la boîte de vitesses le couple nécessaire à l'obtention du couple d'embrayage cible.

La figure 5 est un organigramme illustrant le procédé de fonctionnement de l'organe de contrôle d'embrayage de la figure 1 depuis une situation de roulage avec l'embrayage en position de couple maximal transmissible à une position d'arrêt du véhicule dans laquelle l'embrayage est débrayé puis depuis la position d'arrêt du véhicule avec l'embrayage débrayé à une situation de roulage avec l'embrayage en position de couple maximal transmissible.

L'organe de contrôle d'embrayage 6 surveille en continu la vitesse de l'arbre moteur et la vitesse de l'arbre d'entrée de la boîte de vitesse (étape 65). Ces vitesses sont analysées par l'organe de contrôle d'embrayage 6 afin de détecter des conditions de calage ou d'arrêt du véhicule (étape 66).

Si la vitesse de l'arbre moteur et la vitesse de l'arbre d'entrée de la boîte de vitesses ne correspondent pas à une condition d'arrêt ou de calage (étape 67), c'est-à-dire que le véhicule 8 est dans une phase de roulage dans laquelle le déplacement du véhicule 8 est contrôlé par la régulation du régime moteur via l'organe de contrôle moteur 3, l'embrayage doit rester dans une position de couple transmissible maximale. L'organe de contrôle d'embrayage 6 demeure alors en position de couple transmissible maximal et continue sa surveillance de la vitesse de l'arbre moteur et de l'arbre de boîte de vitesses (étape 65). Si au contraire une condition d'arrêt ou de calage est détectée (étape 68), c'est-à-dire que le véhicule est dans une phase d'arrêt ou de risque de calage moteur, il est alors nécessaire de déplacer l'embrayage vers une position débrayée.

Afin d'assurer le meilleur confort possible au conducteur, l'organe de contrôle d'embrayage 6 détermine un profil d'ouverture progressive de l'embrayage en fonction des conditions d'arrêt ou de calage détectées. Ce profil d'ouverture progressif est adapté à la situation détectée, par exemple selon qu'un freinage d'urgence ou au contraire un freinage léger sont détectés, le déplacement de l'embrayage entre deux positions se fait de manière plus ou moins rapide. L'organe de contrôle d'embrayage 6 applique alors le profil d'ouverture d'embrayage progressif adapté à la situation détectée (étape 69). L'organe de contrôle d'embrayage 6 contrôle en suite l'état de l'embrayage afin de vérifier que l'embrayage est bien débrayé (étape 70). Si l'embrayage n'est pas débrayé (étape 71), l'organe de contrôle d'embrayage 6 détermine un nouveau profil d'ouverture de l'embrayage éventuellement en fonction d'une nouvelle consigne d'embrayage (étape 69). Si au contraire l'embrayage est totalement débrayé (étape 72), le véhicule 8 est à l'arrêt et l'organe de contrôle d'embrayage 6 reste en attente d'une consigne d'embrayage correspondant à un redémarrage du véhicule 8 (étape 73).

Lorsque le véhicule 8 est à l'arrêt et que l'organe de contrôle d'embrayage 6 reçoit une nouvelle consigne d'embrayage, l'organe de contrôle d'embrayage 6 teste si cette consigne d'embrayage est nulle (étape 74).

Si la consigne d'embrayage reçue par l'organe de contrôle d'embrayage 6 est nulle (étape 75), c'est-à-dire que le véhicule 8 doit rester à l'arrêt, l'organe de contrôle d'embrayage 6 reste en attente d'une nouvelle consigne d'embrayage (étape 74) et l'embrayage demeure en position débrayée.

Si au contraire la consigne d'embrayage reçue par l'organe de contrôle d'embrayage 6 est non nulle (étape 76), alors l'organe de contrôle d'embrayage 6 détermine et applique un profil d'engagement progressif de l'embrayage en fonction de la consigne d'embrayage (étape 77). Après avoir appliqué le profil d'ouverture de l'embrayage (étape 77), l'organe de contrôle d'embrayage vérifie si l'arbre moteur et l'arbre d'entrée de la boîte de vitesses sont synchronisés, c'est-à-dire à la même vitesse (étape 78).

Si l'arbre moteur et l'arbre de la boîte de vitesses ne sont pas synchronisés (étape 107), l'embrayage étant dans une position de patinage ne transmettant pas l'intégralité du couple de l'arbre moteur à l'arbre d'entrée de la boîte de vitesses, l'organe de contrôle d'embrayage 6 reste en attente d'une nouvelle consigne d'embrayage (étape 74). Un tel cas de figure se présente notamment lorsque le couple à transmettre via l'embrayage est inférieur au couple maximal transmissible par l'embrayage au régime ralenti du moteur. Cette nouvelle consigne d'embrayage pourra être une consigne d'embrayage aboutissant à une position de couple maximal transmissible de l'embrayage ou au contraire à une position débrayée de l'embrayage, voire une nouvelle position avec patinage.

Si l'arbre moteur et l'arbre de la boîte de vitesses sont synchronisés (étape 108), l'embrayage transmettant l'intégralité du couple de l'arbre moteur à l'arbre d'entrée de la boîte de vitesses, alors l'organe de contrôle d'embrayage 6 contrôle si la consigne d'embrayage correspond à une demande de transmission du couple maximal transmissible par l'embrayage (étape 109). Si la consigne d'embrayage est une consigne de fermeture complète d'embrayage (étape 110), le véhicule 8 entrant dans une phase de roulage durant laquelle l'organe de contrôle moteur 3 pilotera le déplacement du véhicule 8 via la régulation du régime moteur, alors l'organe de contrôle de l'embrayage 6 ferme complètement l'embrayage (étape 111) et retourne à l'étape de surveillance de la vitesse de l'arbre moteur et de l'arbre d'entrée de la boîte de vitesses afin de détecter une condition d'arrêt et/ou de calage (étape 65). Si la consigne d'embrayage ne correspond pas à une consigne de fermeture complète de l'embrayage (étape 112), alors l'organe de contrôle d'embrayage 6 retourne à l'étape de surveillance de la vitesse de l'arbre moteur et de l'arbre d'entrée de la boîte de vitesses afin de détecter une condition d'arrêt et/ou de calage (étape 65).

Dans un mode de réalisation non illustré, l'organe de contrôle d'embrayage 6 comporte en outre en continu une étape de contrôle des pédales du véhicule. Dès lors que l'organe de contrôle d'embrayage 6 détecte une action du conducteur sur l'une des pédales du véhicule, l'organe de contrôle d'embrayage passe dans un mode inactif dans lequel le conducteur contrôle le déplacement du véhicule 8. Si aucune action sur les pédales du véhicule 8 n'est détectée, l'organe de contrôle d'embrayage 6 active, sous réserve de réception de consigne d'embrayage par l'organe de contrôle moteur 3, la surveillance de l'arbre moteur et de l'arbre d'entrée de la boîte de vitesse (étape 65). De manière analogue au procédé de pilotage assisté décrit ci-dessus en regard de la figure 3, le mode inactif de l'organe de contrôle d'embrayage 6 peut être lié à l'activation d'autres organes de contrôle du véhicule et soumis à une comparaison avec un seuil de désactivation.

Les figures 6 à 9 illustrent le comportement des différents organes du véhicule en pilotage assisté dans différentes situations. Sur ces figures, la courbe 79 illustre la distance avec le véhicule cible, la courbe 80 illustre la demande d'accélération positive, la courbe 81 illustre la demande d'accélération négative typiquement la demande de décélération, la courbe 82 illustre la consigne de vitesse véhicule, la courbe 83 illustre la vitesse actuelle du véhicule, la courbe 84 illustre la vitesse moteur, la courbe 85 illustre la vitesse de la boîte de vitesses, la courbe 86 illustre la consigne de couple moteur et la courbe 87 illustre la consigne d'embrayage.

Par ailleurs, sur ces figures, une première phase 88 illustre une phase d'arrêt du véhicule, une seconde phase 89 correspond à une phase d'éloignement du véhicule cible. Sur les figures 6 à 8, une troisième phase 90 correspond à une phase de roulage à distance constante avec le véhicule cible, une quatrième phase 91 correspond à une phase de rapprochement du véhicule cible et une cinquième phase 92 correspond à une phase d'arrêt. Sur la figure 9, une troisième phase 93 correspond à une phase d'éloignement croissant du véhicule cible.

La figure 6 illustre le comportement des différents organes du véhicule en pilotage assisté successivement lors d'un démarrage, en condition de roulage à une vitesse inférieure à la vitesse de ralenti pour le rapport de boîte de vitesses engagé, et lors d'un arrêt du véhicule. Plus particulièrement, la courbe de vitesse de boîte de vitesses illustre le patinage de l'embrayage, permettant une transmission de couple partielle depuis l'arbre moteur à l'arbre d'entrée de la boîte de vitesses jusqu'à ce que la valeur de couple finale demandée par le contrôle moteur soit atteinte. En outre, la courbe de consigne d'embrayage montre bien un déplacement progressif de l'embrayage vers sa position débrayée ou embrayée au maximum, permettant une transition confortable pour le conducteur entre deux positions de l'embrayage.

Par ailleurs, la figure 6 illustre un démarrage depuis une position arrêtée du véhicule. Lors d'un démarrage du véhicule 8, l'organe de contrôle moteur 3 détermine un couple moteur nécessaire à décoller le véhicule et envoie une consigne d'embrayage correspondante à l'organe de contrôle d'embrayage 6. Ce couple moteur nécessaire correspond à un couple moteur permettant de vaincre l'inertie du véhicule au démarrage. L'organe de contrôle d'embrayage 6 détermine une trajectoire de couple pour atteindre la valeur de décollage à partir d'un couple transmissible nul correspondant à l'état véhicule arrêté. Quand le régime de vitesse de la boîte de vitesses souhaité est atteint, l'organe de contrôle moteur 3 réduit la consigne de couple moteur pour stabiliser la vitesse véhicule. En conséquence
l'organe de contrôle moteur 3 réduit en même temps la consigne d'embrayage afin de diminuer le couple transmis par l'embrayage.

La figure 7 illustre le comportement des différents organes du véhicule en pilotage assisté successivement lors d'un démarrage, en condition de roulage avec un embrayage à l'état totalement fermé, et lors d'un arrêt du véhicule.

La figure 8 illustre le comportement des différents organes du véhicule en pilotage assisté successivement lors d'un démarrage, en condition de roulage avec une consigne de couple d'embrayage suivant la consigne de couple moteur, et lors d'un arrêt du véhicule.

La figure 9 illustre le comportement des différents organes du véhicule en pilotage assisté successivement lors d'un démarrage puis en condition de roulage à une vitesse supérieure à la vitesse maximale du véhicule pour le rapport de boîte de vitesses engagé.

Comme illustré sur la figure 10, le module d'assistance à la conduite 2 pourrait également envoyer une consigne d'accélération calculée comme ci-dessus directement à un bloc de contrôle des actionneurs 94 d'un véhicule à boîte automatique. Un tel bloc de contrôle des actionneurs 94 pourrait par exemple être le bloc gérant la transmission de couple entre le moteur et les roues sur un tel véhicule à boîte de vitesses automatique.

L'usage du verbe « comporter », « comprendre » ou « inclure » et de ses formes conjuguées n'exclut pas la présence d'autres éléments ou d'autres étapes que ceux énoncés dans une revendication. L'usage de l'article indéfini « un » ou « une » pour un élément ou une étape n'exclut pas, sauf mention contraire, la présence d'une pluralité de tels éléments ou étapes.

Dans les revendications, tout signe de référence entre parenthèses ne saurait être interprété comme une limitation de la revendication.

## Revendications

1. Dispositif d'assistance à la conduite pour véhicule automobile, comportant en outre un capteur de rapport de boîte de vitesse, et dans lequel un module d'assistance à la conduite (2) est apte à détecter une condition d'entrée dans un procédé d'assistance à la conduite, la condition d'entrée comportant une condition de rapport de boîte de vitesse, la condition de rapport de boîte de vitesse étant satisfaite lorsque le rapport de boîte de vitesse est égal à un rapport de boîte de vitesse prédéterminé choisi parmi le premier rapport et le second rapport de la boîte de vitesse,
le véhicule comportant en outre un organe de contrôle moteur (3) apte à :
- calculer une consigne de vitesse véhicule (41, 43, 95) en fonction d'une consigne d'accélération en fonction d'une distance avec une cible en fonction du temps et d'une vitesse actuelle du véhicule,
- calculer une consigne de couple de gestion de la dynamique du véhicule (50, 54, 56) en fonction de la consigne de vitesse véhicule, de la vitesse actuelle du véhicule et d'un couple actuel du groupe motopropulseur,
- calculer une consigne de couple d'entrée de boîte de vitesse (57) en fonction du rapport de boîte de vitesse engagé et de la consigne de couple de gestion de la dynamique du véhicule,
- réguler le régime moteur en fonction de la consigne de couple d'entrée de boîte de vitesse, et à
- calculer une consigne de couple d'embrayage en fonction de la consigne de couple d'entrée de boîte de vitesse et de l'état de l'embrayage,
le véhicule comportant en outre un organe de contrôle d'embrayage (6) apte à réguler une grandeur physique pilotant le couple transmissible par l'embrayage en fonction de la consigne de couple d'embrayage le dispositif d'assistance à la conduite comportant en outre un capteur d'inclinaison de la route, le module d'assistance à la conduite étant en outre configuré pour déterminer une inclinaison de la route,
**caractérisé en ce que**
le rapport de boîte de vitesse prédéterminé est le second rapport en réponse à une inclinaison de la route négative ou nulle et le premier rapport en réponse à une inclinaison de la route positive.

2. Dispositif d'assistance à la conduite pour véhicule automobile selon la revendication 1 comportant
- une caméra (9) apte à générer une première cartographie de l'environnement du véhicule automobile (8) dans une première zone d'environnement frontale (11) du véhicule entre une première distance minimale et une première distance maximale,
- un capteur temps de vol (12) apte à générer une seconde cartographie de l'environnement du véhicule (8) dans une seconde zone d'environnement frontale (96) du véhicule entre une seconde distance minimale inférieure à la première distance minimale et une seconde distance maximale comprise entre la première distance minimale et la première distance maximale de sorte que la première zone d'environnement frontale (11) du véhicule et la seconde zone d'environnement frontale (96) du véhicule comportent une zone commune de l'environnement du véhicule,
- le module d'assistance à la conduite (2) comportant :
o une unité de fusion (13) apte à générer une cartographie fine de l'environnement frontal du véhicule dans une troisième zone d'environnement frontale (103) du véhicule, la cartographie fine étant générée par l'unité de fusion (13) en fonction de la première cartographie et de la seconde cartographie, la troisième zone d'environnement frontale (103) du véhicule (8) comportant l' intersection de la première zone d'environnement frontale (11) du véhicule et de la seconde zone d'environnement frontale (96) du véhicule, et
o une unité de calcul de déplacement apte à générer une consigne d'accélération du véhicule en fonction de la cartographie fine de l'environnement du véhicule.

3. Dispositif d'assistance à la conduite selon la revendication 2, comportant en outre un capteur ultrason (16) apte à générer une troisième cartographie de l'environnement du véhicule dans une quatrième zone d'environnement frontale (104) du véhicule entre une troisième distance minimale inférieure à la seconde distance minimale et une troisième distance maximale comprise entre la seconde distance minimale et la première distance maximale, et dans lequel l'unité de fusion (13) du module d'assistance à la conduite (2) est apte à générer la cartographie fine de l'environnement frontal du véhicule à partir des première, seconde et troisième cartographies, la troisième zone d'environnement du véhicule comportant l'intersection des première, seconde et quatrième zones d'environnement frontales du véhicule.

4. Dispositif d'assistance à la conduite selon l'une des revendications 2 à 3, dans lequel le module d'assistance à la conduite (2) comporte en outre une unité de ciblage (14) apte à sélectionner la cible à suivre parmi un ensemble d'obstacles de l'environnement du véhicule répertoriés par la cartographie fine, et dans lequel l'unité de calcul de déplacement est apte à calculer une distance séparant le véhicule de la cible sélectionnée et à générer la consigne d'accélération du véhicule en fonction de ladite distance calculée séparant le véhicule de la cible sélectionnée.

5. Dispositif d'assistance à la conduite selon la revendication 4, dans lequel l'unité de calcul de déplacement est apte à calculer une vitesse et une accélération de la cible sélectionnée par dérivation de la distance entre le véhicule et la cible sélectionnée, la consigne d'accélération du véhicule étant calculée en fonction de l'accélération de la cible sélectionnée.

6. Dispositif d'assistance à la conduite selon l'une des revendications 2 à 5, dans lequel le capteur temps de vol (12) est un capteur infrarouge.

7. Dispositif d'assistance à la conduite selon l'une des revendications 2 à 6, dans lequel l'unité de fusion (13) est apte à associer ensemble l'un parmi des objets répertoriés par la première cartographie et un objet correspondant parmi les objets répertoriés par la seconde cartographie et à déterminer une position dans la cartographie fine d'un objet correspondant auxdits objets associés de la première cartographie et de la seconde cartographie.

8. Dispositif d'assistance à la conduite selon l'une des revendications 2 à 7, dans lequel l'unité de fusion est apte à générer une cartographie fine de l'environnement du véhicule répertoriant un ensemble d'objets mobiles et un marquage au sol de l'environnement du véhicule, l'unité de calcul de déplacement étant apte à générer une consigne de déplacement latéral en fonction du marquage au sol répertorié par la cartographie fine.

9. Dispositif d'assistance à la conduite selon la revendication 1, comportant en outre une interface homme machine (15), l'interface homme machine comportant un moyen d'information d'un conducteur configuré pour émettre un signal de détection de conditions d'entrée du procédé d'assistance à la conduite, la condition d'entrée dans le procédé d'assistance à la conduite comportant en outre l'activation d'un organe d'activation par le conducteur.

10. Dispositif d'assistance à la conduite selon l'une des revendications 1 ou 9, comportant en outre un capteur d'activation de pédale du véhicule, et dans lequel le module d'assistance à la conduite est en outre configuré pour :
- détecter une condition de sortie du procédé d'assistance à la conduite (35), la condition de sortie comportant une condition d'activation d'une pédale du véhicule, la condition d'activation de pédale du véhicule étant satisfaite lorsqu'un utilisateur appui sur l'une parmi la pédale d'accélération du véhicule et la pédale d'embrayage du véhicule ;
- terminer le procédé d'assistance à la conduite lorsque la condition de sortie est satisfaite.

## Patentansprüche

1. Vorrichtung zur Fahrerassistenz für ein Kraftfahrzeug, die ferner einen Getriebegangsensor umfasst, und wobei ein Modul zur Fahrerassistenz (2) dazu fähig ist, in einem Verfahren zur Fahrerassistenz eine Eintrittsbedingung zu detektieren, wobei die Eintrittsbedingung eine Getriebegangbedingung umfasst, wobei die Getriebegangbedingung erfüllt ist, wenn der Getriebegang gleich einem vorgegebenen Getriebegang ist, der aus dem ersten Gang und dem zweiten Gang des Getriebes ausgewählt ist,
wobei das Fahrzeug ferner ein Motorsteuerungsorgan (3) umfasst, das zu Folgendem fähig ist:
- Berechnen eines Fahrzeuggeschwindigkeitssollwerts (41, 43, 95) in Abhängigkeit von einem Beschleunigungssollwert in Abhängigkeit von einem Abstand zu einem Ziel in Abhängigkeit von der Zeit und einer aktuellen Geschwindigkeit des Fahrzeugs,
- Berechnen eines Drehmomentsollwerts zur Verwaltung der Dynamik des Fahrzeugs (50, 54, 56) in Abhängigkeit von dem Fahrzeuggeschwindigkeitssollwert, der aktuellen Geschwindigkeit des Fahrzeugs und einem aktuellen Drehmoment der Motorantriebseinheit,
- Berechnen eines Getriebeeingangsdrehmomentsollwerts (57) in Abhängigkeit von dem eingelegten Getriebegang und dem Drehmomentsollwert zur Verwaltung der Dynamik des Fahrzeugs,
- Regeln der Motordrehzahl in Abhängigkeit von dem Getriebeeingangsdrehmomentsollwert und
- Berechnen eines Kupplungsdrehmomentsollwerts in Abhängigkeit von dem Getriebeeingangsdrehmomentsollwert und dem Zustand der Kupplung,
wobei das Fahrzeug ferner ein Kupplungssteuerungsorgan (6) umfasst, das dazu fähig ist, eine physikalische Größe zu regeln, die das von der Kupplung übertragbare Drehmoment in Abhängigkeit von dem Kupplungsdrehmomentsollwert ansteuert,
wobei die Vorrichtung zur Fahrerassistenz ferner einen Straßenneigungssensor umfasst, wobei das Modul zur Fahrerassistenz ferner dazu konfiguriert ist, eine Neigung der Straße zu bestimmen,
**dadurch gekennzeichnet, dass**
der vorgegebene Getriebegang als Reaktion auf eine Straßenneigung, die negativ oder null ist, der zweite Gang ist, und als Reaktion auf eine Straßenneigung, die positiv ist, der erste Gang ist.

2. Vorrichtung zur Fahrerassistenz für ein Kraftfahrzeug nach Anspruch 1, die Folgendes umfasst:
- eine Kamera (9), die dazu fähig ist, eine erste Kartografie der Umgebung des Kraftfahrzeugs (8) in einem ersten frontalen Umgebungsbereich (11) des Fahrzeugs zwischen einem ersten minimalen Abstand und einem ersten maximalen Abstand zu erzeugen,
- einen Laufzeitsensor (12), der dazu fähig ist, eine zweite Kartografie der Umgebung des Fahrzeugs (8) in einem zweiten frontalen Umgebungsbereich (96) des Fahrzeugs zwischen einem zweiten minimalen Abstand, der kleiner als der erste minimale Abstand ist, und einem zweiten maximalen Abstand, der zwischen dem ersten minimalen Abstand und dem ersten maximalen Abstand liegt, zu erzeugen, sodass der erste frontale Umgebungsbereich (11) des Fahrzeugs und der zweite frontale Umgebungsbereich (96) des Fahrzeugs einen gemeinsamen Bereich der Umgebung des Fahrzeugs umfassen,
- wobei das Modul zur Fahrerassistenz (2) Folgendes umfasst:
o eine Fusionierungseinheit (13), die dazu fähig ist, eine feine Kartografie der frontalen Umgebung des Fahrzeugs in einem dritten frontalen Umgebungsbereich (103) des Fahrzeugs zu erzeugen, wobei die feine Kartografie von der Fusionierungseinheit (13) in Abhängigkeit von der ersten Kartografie und der zweiten Kartografie erzeugt wird, wobei der dritte frontale Umgebungsbereich (103) des Fahrzeugs (8) die Überschneidung zwischen dem ersten frontalen Umgebungsbereich (11) des Fahrzeugs und dem zweiten frontalen Umgebungsbereich (96) des Fahrzeugs umfasst, und
o eine Bewegungsberechnungseinheit, die dazu fähig ist, einen Beschleunigungssollwert des Fahrzeugs in Abhängigkeit von der feinen Kartografie der Umgebung des Fahrzeugs zu erzeugen.

3. Vorrichtung zur Fahrerassistenz nach Anspruch 2, die ferner einen Ultraschallsensor (16) umfasst, der dazu fähig ist, eine dritte Kartografie der Umgebung des Fahrzeugs in einem vierten frontalen Umgebungsbereich (104) des Fahrzeugs zwischen einem dritten minimalen Abstand, der kleiner als der zweite minimale Abstand ist, und einem dritten maximalen Abstand, der zwischen dem zweiten minimalen Abstand und dem ersten maximalen Abstand liegt, zu erzeugen, und wobei die Fusionierungseinheit (13) des Moduls zur Fahrerassistenz (2) dazu fähig ist, die feine Kartografie der frontalen Umgebung des Fahrzeugs anhand der ersten, der zweiten und der dritten Kartografie zu erzeugen, wobei der dritte Umgebungsbereich des Fahrzeugs die Überschneidung zwischen dem ersten, dem zweiten und dem vierten frontalen Umgebungsbereich des Fahrzeugs umfasst.

4. Vorrichtung zur Fahrerassistenz nach einem der Ansprüche 2 bis 3, wobei das Modul zur Fahrerassistenz (2) ferner eine Zielanpeilungseinheit (14) umfasst, die dazu fähig ist, das zu verfolgende Ziel aus einer Gesamtheit von Hindernissen in der Umgebung des Fahrzeugs, die in der feinen Kartografie aufgezeichnet sind, auszuwählen, und wobei die Bewegungsberechnungseinheit dazu fähig ist, einen Abstand, der das Fahrzeug von dem ausgewählten Ziel trennt, zu berechnen und den Beschleunigungssollwert des Fahrzeugs in Abhängigkeit von dem berechneten Abstand, der das Fahrzeug von dem ausgewählten Ziel trennt, zu erzeugen.

5. Vorrichtung zur Fahrerassistenz nach Anspruch 4, wobei die Bewegungsberechnungseinheit dazu fähig ist, eine Geschwindigkeit und eine Beschleunigung des ausgewählten Ziels durch Ableitung des Abstands zwischen dem Fahrzeug und dem ausgewählten Ziel zu berechnen, wobei der Beschleunigungssollwert des Fahrzeugs in Abhängigkeit von der Beschleunigung des ausgewählten Ziels berechnet wird.

6. Vorrichtung zur Fahrerassistenz nach einem der Ansprüche 2 bis 5, wobei der Laufzeitsensor (12) ein Infrarotsensor ist.

7. Vorrichtung zur Fahrerassistenz nach einem der Ansprüche 2 bis 6, wobei die Fusionierungseinheit (13) dazu fähig ist, eines von in der ersten Kartografie aufgezeichneten Objekten mit einem entsprechenden Objekt der in der zweiten Kartografie aufgezeichneten Objekte zu assoziieren und eine Position eines Objekts, das den assoziierten Objekten der ersten Kartografie und der zweiten Kartografie entspricht, in der feinen Kartografie zu bestimmen.

8. Vorrichtung zur Fahrerassistenz nach einem der Ansprüche 2 bis 7, wobei die Fusionierungseinheit dazu fähig ist, eine feine Kartografie der Umgebung des Fahrzeugs, die eine Gesamtheit von mobilen Objekten und eine Markierung auf dem Boden der Umgebung des Fahrzeugs aufzeichnet, zu erzeugen, wobei die Bewegungsberechnungseinheit dazu fähig ist, in Abhängigkeit von der Markierung auf dem Boden, die in der feinen Kartografie aufgezeichnet ist, einen seitlichen Bewegungssollwert zu erzeugen.

9. Vorrichtung zur Fahrerassistenz nach Anspruch 1, die ferner eine Mensch-Maschine-Schnittstelle (15) umfasst, wobei die Mensch-Maschine-Schnittstelle ein Informationsmittel eines Fahrers umfasst, das dazu konfiguriert ist, ein Detektionssignal von Eintrittsbedingungen des Verfahrens zur Fahrerassistenz auszugeben, wobei die Eintrittsbedingung in das Verfahren zur Fahrerassistenz ferner die Aktivierung eines Aktivierungsorgans durch den Fahrer umfasst.

10. Vorrichtung zur Fahrerassistenz nach einem der Ansprüche 1 oder 9, die ferner einen Sensor der Aktivierung eines Pedals des Fahrzeugs umfasst, und wobei das Modul zur Fahrerassistenz ferner zu Folgendem konfiguriert ist:
- Detektieren einer Austrittsbedingung des Verfahrens zur Fahrerassistenz (35), wobei die Austrittsbedingung eine Bedingung der Aktivierung eines Pedals des Fahrzeugs umfasst, wobei die Bedingung der Aktivierung eines Pedals des Fahrzeugs erfüllt ist, wenn ein Benutzer auf eines von dem Beschleunigungspedal des Fahrzeugs und dem Kupplungspedal des Fahrzeugs drückt;
- Beenden des Verfahrens zur Fahrerassistenz, wenn die Austrittsbedingung erfüllt ist.

## Claims

1. Driving assistance device for a motor vehicle, said device further comprising a gearbox ratio sensor, and in which a driving assistance module (2) is capable of detecting a condition for entering a driving assistance method, the entry condition comprising a gearbox ratio condition, the gearbox ratio condition being met when the gearbox ratio is equal to a predetermined gearbox ratio selected from the first gear ratio and the second gear ratio of the gearbox,
the vehicle further comprising an engine control unit (3) capable of:
- computing a vehicle speed setpoint (41, 43, 95) as a function of an acceleration setpoint depending on a distance to a target as a function of time and of a current speed of the vehicle;
- computing a vehicle dynamics management torque setpoint (50, 54, 56) as a function of the vehicle speed setpoint, of the current speed of the vehicle and of a current torque of the powertrain;
- computing a gearbox input torque setpoint (57) as a function of the engaged gearbox ratio and of the vehicle dynamics management torque setpoint;
- regulating the engine speed as a function of the gearbox input torque setpoint; and
- computing a clutch torque setpoint as a function of the gearbox input torque setpoint and of the clutch status,
the vehicle further comprising a clutch control unit (6) capable of regulating a physical quantity controlling the torque that can be transferred by the clutch as a function of the clutch torque setpoint,
the driving assistance device further comprising a road grade sensor, the driving assistance module being further configured to determine a road grade, **characterized in that**
the predetermined gearbox ratio is the second gear ratio in response to a negative or zero road grade and the first gear ratio in response to a positive road grade.

2. Driving assistance device for a motor vehicle according to Claim 1, comprising:
- a camera (9) capable of generating a first map of the environment of the motor vehicle (8) in a first frontal environment area (11) of the vehicle between a first minimum distance and a first maximum distance;
- a transit time sensor (12) capable of generating a second map of the environment of the vehicle (8) in a second frontal environment area (96) of the vehicle between a second minimum distance below the first minimum distance and a second maximum distance between the first minimum distance and the first maximum distance so that the first frontal environment area (11) of the vehicle and the second frontal environment area (96) of the vehicle comprise a common area of the environment of the vehicle;
- the driving assistance module (2) comprising:
o a fusion unit (13) capable of generating a precise map of the frontal environment of the vehicle in a third frontal environment area (103) of the vehicle, the precise map being generated by the fusion unit (13) as a function of the first map and of the second map, the third frontal environment area (103) of the vehicle (8) comprising the intersection of the first frontal environment area (11) of the vehicle and of the second frontal environment area (96) of the vehicle; and
o a movement computation unit capable of generating an acceleration setpoint of the vehicle as a function of the precise map of the vehicle environment.

3. Driving assistance device according to Claim 2, further comprising an ultrasound sensor (16) capable of generating a third map of the vehicle environment in a fourth frontal environment area (104) of the vehicle between a third minimum distance below the second minimum distance and a third maximum distance between the second minimum distance and the first maximum distance, and wherein the fusion unit (13) of the driving assistance module (2) is capable of generating the precise map of the frontal environment of the vehicle on the basis of the first, second and third maps, the third environment area of the vehicle comprising the intersection of the first, second and fourth frontal environment areas of the vehicle.

4. Driving assistance device according to any of Claims 2 to 3, wherein the driving assistance module (2) further comprises a targeting unit (14) capable of selecting the target to be tracked from among a set of obstacles of the vehicle environment which are identified by the precise map, and wherein the movement computation unit is capable of computing a distance separating the vehicle from the selected target and of generating the acceleration setpoint of the vehicle as a function of said computed distance separating the vehicle from the selected target.

5. Driving assistance device according to Claim 4, wherein the movement computation unit is capable of computing a speed and an acceleration of the selected target by deriving the distance between the vehicle and the selected target, the acceleration setpoint of the vehicle being computed as a function of the acceleration of the selected target.

6. Driving assistance device according to any of Claims 2 to 5, wherein the transit time sensor (12) is an infrared sensor.

7. Driving assistance device according to any of Claims 2 to 6, wherein the fusion unit (13) is capable of combining together one of the objects identified by the first map and a corresponding object from the objects identified by the second map and of determining a position in the precise map of an object corresponding to said combined objects of the first map and of the second map.

8. Driving assistance device according to any of Claims 2 to 7, wherein the fusion unit is capable of generating a precise map of the vehicle environment identifying a set of mobile objects and a road marking of the vehicle environment, the movement computation unit being capable of generating a lateral movement setpoint as a function of the road marking identified by the precise map.

9. Driving assistance device according to Claim 1, further comprising a human-machine interface (15), the human-machine interface comprising a driver information means configured to transmit a signal of detection of conditions for entering the driving assistance method, the condition for entering the driving assistance method further comprising the activation of an activation unit by the driver.

10. Driving assistance device according to either of Claims 1 and 9, further comprising a vehicle pedal activation sensor, and wherein the driving assistance module is further configured to:
- detect a condition (35) for exiting the driving assistance method, the exit condition comprising a condition of activation of a pedal of the vehicle, the condition of activation of a pedal of the vehicle being met when a user presses on either the vehicle acceleration pedal or the vehicle clutch pedal;
- terminate the driving assistance method when the output condition is met.
